# EUROPÄISCHE PATENTSCHRIFT

(11) **EP 0 360 184 B1**
(45) Veröffentlichungstag und Bekanntmachung des Hinweises auf die Patenterteilung: **12.01.1994**
(21) Anmeldenummer: 89117203.3
(22) Anmeldetag: 18.09.1989
(51) Int. Cl.: C09B 67/02, C09B 67/22, C09B 3/60, C09B 67/10

(54) **Verfahren zur Herstellung von Pigmentzubereitungen der Anthanthronreihe**
Process for the manufacture of pigment preparations of the anthanthrone range
Procédé de fabrication de préparations pigmentaires de la série des anthanthrones

(30) Priorität: 21.09.1988 DE 3832064
(43) Veröffentlichungstag der Anmeldung: 28.03.1990
(73) Patentinhaber: HOECHST AKTIENGESELLSCHAFT, 65926 Frankfurt am Main (DE)
(72) Erfinder: Dietz, Erwin, Dr., D-6233 Kelkheim(Taunus) (DE); Urban, Manfred, D-6200 Wiesbaden (DE); Schiessler, Siegfried, Dr., D-6232 Bad Soden am Taunus (DE)

(56) Entgegenhaltungen:
- EP-A- 0 014 458
- EP-A- 0 277 914
- FR-A- 2 211 512
- US-A- 4 762 569

## Beschreibung

Die vorliegende Erfindung betrifft ein besonders umweltfreundliches und wirtschaftliches Verfahren zur Herstellung von Pigmentzubereitungen, die sich durch ihre hervorragenden coloristischen und rheologischen Eigenschaften, wie Dispergierbarkeit, Flockungsstabilität, Rheologie, Glanzverhalten und Farbstärke auszeichnen. Sie dienen zum Pigmentieren von hochmolekularen Materialien, insbesondere von Lacksystemen.
Von den Anthanthronderivaten hat insbesondere das 4,10-Dibrom-anthanthron als Pigment große technische Bedeutung erlangt. Die Herstellung des Rohpigments ist im Fiat Final Report 1313 Vol II beschrieben.
Hierbei wird 8,8′-Dicarboxy-1,1′-dinaphthyl in Schwefelsäure-Monohydrat zum Anthanthron cyclisiert und anschließend bromiert. Das so erhaltene 4,10-Dibromanthanthron wird durch Zugabe geringer Mengen Wasser als Sulfat ausgefällt und isoliert. Durch Hydrolyse wird daraus das 4,10-Dibromanthanthronrohpigment freigesetzt.

Zur Überführung dieses Rohpigments in Pigmentform sind verschiedene Feinverteilungsverfahren bekannt geworden:
1. In der DE-PS 2540739 wird die Feinverteilung des Rohpigments durch Lösen in konzentrierten Säuren und anschließendes Ausfällen durch Eingießen in Wasser beschrieben. An die Feinverteilung schließt sich eine Behandlung mit Cetyltrimethylammoniumbromid an. Die so erhaltenen Pigmente besitzen nur mäßige Farbstärke. Außerdem fallen große Mengen verdünnter Schwefelsäure an, die wieder regeneriert werden müssen.
2. In der EP-PS 0075182 wird ein Verfahren beschrieben, bei dem die Feinverteilung des Rohpigments durch Behandlung mit Polyphosphorsäure und anschließende Hydrolyse erfolgt, der sich bekannte Finishvarianten anschließen können. Die nach diesem Verfahren hergestellten Pigmente besitzen nur geringe Farbstärke. Das Verfahren ist sehr aufwendig, da die anfallenden großen Mengen verdünnter Phosphorsäure wieder aufgearbeitet werden müssen.
3. In der US-PS 4705572 wird ein Verfahren beschrieben, bei dem die Feinverteilung des Rohpigments durch Umküpung erfolgt. An die Feinverteilung schließt sich ein Lösungsmittelfinish an. Es werden zwar farbstarke Pigmente erhalten, aber die bei der Umküpung anfallenden Salzmengen führen zu Abwasserproblemen. Wegen der hohen Kosten für Chemikalien ist dieses Verfahren unwirtschaftlich.
4. Die US-PS 4018791 beschreibt die Reinigung des Rohpigments über das Sulfat und anschließende Mahlung in einem flüssigem Medium. Es werden farbstarke Pigmente erhalten, wenn man die nach der Synthese anfallenden Rohpigmente mit der 25fachen Menge konzentrierter Schwefelsäure in das Sulfat überführt, dieses isoliert, daraus durch Hydrolyse das Reinprodukt freisetzt, abtrennt und in einem flüssigen Medium mahlt. Die nach diesem Verfahren erhaltenen Pigmente zeigen bei der Einarbeitung in Lacke ungenügendes rheologisches Verhalten. Dies wird durch eine starke Flockung des Pigments verursacht, was außerdem zu schlechtem Glanz beim applizierten Lack und zu einer hohen Viskosität des Mahlguts führt. Die großen Mengen anfallender ca. 70 - 80%iger Schwefelsäure müssen wieder regeneriert werden. Außerdem werden extrem lange Mahlzeiten benötigt und deshalb wird nur eine niedrige Raumzeitausbeute erzielt. Aus diesen Gründen ist dieses Verfahren sehr teuer und unwirtschaftlich. Die erhaltenen Pigmente genügen nicht den heutigen Anforderungen.

Demgegenüber wurde gefunden, daß Pigmentzubereitungen der Anthanthronreihe ohne ökologische Probleme und mit geringem Kostenaufwand hergestellt werden können, indem man die nach der Synthese anfallenden Anthanthron-Rohpigmente einer wäßrigen Perlmahlung in Gegenwart von Pigmentdispergatoren der allgemeinen Formeln 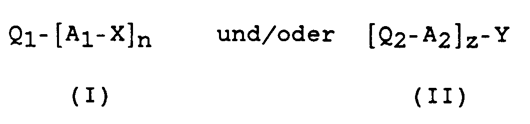
unterwirft, wobei in Formel (I) Q₁ den Rest einer Anthanthron-, Azo-, Isoindolinon, Diketopyrrolopyrrol-oder Perinon-Verbindung, A₁ eine direkte Bindung oder eine bivalente Gruppe aus der Reihe -O-, -S-, -NR₃-, -CO-, -SO₂-, -CR₄R₅- und Arylen, beispielsweise Phenylen oder Naphthylen oder eine chemisch sinnvolle Kombination dieser bivalenten Gruppen, X eine Gruppen 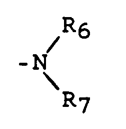
oder einen heterocyclischen Rest mit mindestens einem Stickstoffatom, beispielsweise einen Imidazol- oder Piperazin-Rest, und R₃, R₄, R₅, R₆ und R₇ Wasserstoffatome oder gesättigte oder ungesättigte Alkyl (C₁-C₄)-Gruppen und n eine ganze Zahl von 1-4 bedeuten, und in Formel (II) Q₂ einen Rest der allgemeinen Formel 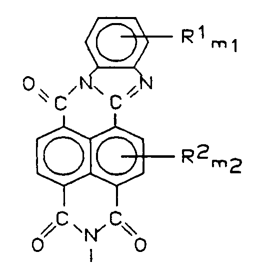
darstellt, in welcher R₁ ein Wasserstoff- oder Halogenatom, eine Alkyl(C₁-C₄)-, Alkoxy(C₁-C₄)- oder Cyanogruppe bedeutet, oder im Fall m₁>1 eine Kombination dieser Substituenten sein kann, R₂ ein Wasserstoff- oder Halogenatom, eine Alkyl(C₁-C₄)-, Alkoxy(C₁-C₄)- oder Cyanogruppe bedeutet oder im Fall m₂>1 eine Kombination dieser Substituenten sein kann, m₁ und m₂ Zahlen von 1 bis 4 bedeuten, A₂ eine bivalente Gruppe aus der Reihe -(CH₂)ₚ-, CR₈R₉-, Arylen, -O-, -NR₁₀-, -CO- oder -SO₂- oder eine chemisch sinnvolle Kombination dieser bivalenten Gruppen bedeutet, wobei p eine Zahl von 1 bis 6, R₈, R₉ und R₁₀ Wasserstoffatome oder gesättigte oder ungesättigte Alkyl(C₁-C₄)-Gruppen darstellen,
Y eine Dimethylamino- oder Diethylaminogruppe oder einen Imidazol- oder Piperazinrest bedeutet und z die Zahl 1 oder 2 darstellt, und die erhaltenen Präpigmentzubereitungssuspensionen ohne oder nach Zwischenisolierung einer thermischen Behandlung in Gegenwart oder Abwesenheit eines organischen Lösungsmittels bei Temperaturen von etwa 20 bis etwa 200 °C unterwirft.

Die so erhaltenen Pigmentzubereitungen zeichnen sich durch hervorragende Coloristik und Rheologie aus. Für die wäßrige Perlmahlung eignen sich besonders über das Oxoniumsulfat hergestellte Rohpigmente mit einer mittleren Teilchengröße von > 5 µ. Bevorzugt werden die nach der Synthese gemäß Fiat Report anfallenden feuchten, grobkristallinen Rohpigmente eingesetzt. Das Mahlmedium ist vorzugsweise Wasser. Es kann aber auch mit Wasser mischbare Lösungsmittel enthalten.

Bevorzugt eingesetzt werden basische Pigmentdispergatoren der allgemeinen Formel

[Q₂-A₂]_{z}-Y,

in welcher der Rest Q₂ unsubstituiert (R¹ = R² = H) ist, Y eine Dimethylamino- oder Diethylaminogruppe oder einen Imidazol- oder Piperazinrest bedeutet sowie z die Zahl 1 oder 2 darstellt.

Die genannten Pigmentdispergatoren werden in Mengen von etwa 0,1 bis 25 Gew.-%, vorzugsweise etwa 1 bis etwa 10 Gew.-%, bezogen auf das Rohpigment, eingesetzt. Es können auch Gemische von Pigmentdispergatoren der genannten allgemeinen Formel (I) und/oder (II) eingesetzt werden. Auch anionaktive, kationaktive oder nichtionogene oberflächenaktive Substanzen können zugesetzt werden.

Für die Mahlung eignen sich diskontinuierliche oder insbesondere kontinuierliche Rührwerkskugelmühlen mit horizontalem, vertikalem, zylinderförmigem oder ringförmigem Mahlraum. Die Mahlung wird in der Regel bei 0 bis 100°C, vorzugsweise 10 bis 50 °C, durchgeführt. Als Mahlkörper werden vorzugsweise Kugeln mit einem Durchmesser von 0,3 bis 3 mm aus Quarz, Aluminiumoxid, Zirkonoxid oder Mischoxiden eingesetzt.
Die nach der Mahlung vorliegende feinteilige Präpigmentzubereitung wird in wäßriger Suspension oder nach Zusatz von organischen Lösungsmitteln thermisch behandelt (Finish).

Als Lösungsmittel für den Finish kommen beispielsweise folgende in Frage:
Alkanole (C₁-C₁₀), wie Methanol, Ethanol, Propanol, n- oder i-Butanol, Dialkyl C₁-C₆ -oder cyclische Ketone, wie beispielsweise Dimethylketon, Diethylketon, Methyl-ethylketon, Cyclohexanon, Ether und Glykolether, wie beispielsweise der Monomethyl- oder Monoethylether des Glykols, Ethyldiglykol, Methoxybutanol, aromatische Kohlenwasserstoffe, wie z. B. Toluol, Xylole oder Ethylbenzol, aromatische Chlorkohlenwasserstoffe, wie z. B. Chlorbenzol, o-Dichlorbenzol, 1,2,4-Trichlorbenzol oder Brombenzol, aromatische Nitroverbidnungen, wie beispielsweise Nitrobenzol oder Nitrophenol, aliphatische Carbonsäureamide, wie z. B. Formamid oder Dimethylformamid, cyclische Carbonsäureamide, wie, z. B. N-Methyl-pyrrolidon, Carbonsäure C₁-C₄-alkyl C₁-C₄ ester, wie beispielsweise Ameisensäurebutylester, Essigsäureethylester oder Propionsäurepropylester, oder Benzoesäure-alkylC₁-C₄ester, wie beispielweise Benzoesäureethylester oder heterocyclische Basen, wie z. B. Pyridine, Morpholin, Picolin sowie Dimethylsulfoxid und Sulfolan.

Bevorzugte organische Lösungsmittel sind Alkanole, wie z. B. Ethanol, Propanol, Butanole und Pentanole oder aromatische Kohlenwasserstoffe, wie z. B. Xylol, Ethylbenzol und Cumol. Der Lösungsmittelfinish kann entsprechend den angestrebten Eigenschaften der Pigmentzubereitung in weiten Grenzen variieren. Normalerweise wird die Suspension der Präpigmentzubereitung bei einer Temperatur von etwa 50 bis etwa 200 °C bis 24 Stunden behandelt. Die Lösungsmittelmenge kann in weiten Grenzen schwanken. Bevorzugt verwendet man die gleiche bis 5fache Gewichtsmenge Lösungsmittel, bezogen auf die Präpigmentzubereitung.

Die Behandlung in dem wäßrig-organischen Medium wird vorzugsweise 1 bis 6 Stunden bei etwa 80 bis etwa 150 °C durchgeführt. Die Lösungsmittel werden nach dem Finish zurückgewonnen und wieder eingesetzt. Bevorzugt wird die nach der Mahlung erhaltene Suspension der Präpigmentzubereitung ohne Zwischenisolierung eingesetzt. Je nach Verwendungszweck kann man die nach dem erfindungsgemäßen Verfahren anfallenden Präpigmentzubereitungen in eine deckendere oder transparentere Form überführen, was über das Lösevermögen des Lösungsmittels, die Konzentration, die Temperatur und die Dauer der Behandlung gesteuert werden kann.

Die erfindungsgemäßen Pigmentzubereitungen eignen sich zum Pigmentieren von hochmolekularen natürlichen oder synthetischen organischen Materialien, wie beispielsweise Celluloseether und -ester, wie Ethylcellulose, Nitrocellulose, Celluloseacetat, Cellulosebutyrat, natürliche Harze oder Kunstharze, wie Polymerisationsharze oder Kondensationsharze, z. B. Aminoplaste, insbesondere Harnstoff- und Melamin-Formaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen. Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß zu verwendenden Pigmente als Toner oder in Form von Präparationen oder Dispersionen einzusetzen. Bezogen auf das zu pigmentierende hochmolekulare organische Material setzt man die erfindungsgemäß hergestellten Pigmente in einer Menge von vorzugsweise 0,1 bis 10 Gew.-% ein.

Die nach dem erfindungsgemäßen Verfahren hergestellten Pigmentzubereitungen eignen sich besonders für die Anwendung in Einbrennlacksystemen, z. B. in Alkyd-Melamin-Harzlacken und Acryl-Melaminharzlacken, Zweikomponentenlacksystemen auf Basis polyisocyanatvernetzbarer Acrylharze und wäßrigen Lacksystemen. Nach der Einarbeitung werden farbstarke, reine und glänzende Lackierungen mit sehr guter Wetterechtheit erhalten. Die so hergestellten Pigmentzubereitungen besitzen in modernen Lacksystemen ein sehr gutes Fließverhalten, auch bei hohen Pigmentkonzentrationen bei gleichzeitig hervorragender Flockungsstabilität.
Bei Verwendung von Pigmentdispergatoren auf Basis Naphthoylenbenzimidazoldicarbonsäure und Bis-(3-aminopropyl)-piperazin werden Pigmentzubereitungen mit einwandfreier Überlackierechtheit in allen gängigen Lacksystemen erhalten.

Die Herstellung dieser Pigmentzubereitungen nach dem beanspruchten Verfahren erfolgt ohne Abfallprodukte, mit wenig Chemikalien und mit Lösungsmitteln, die weiterverarbeitet oder die wieder vollständig regeneriert werden. Aus diesen Gründen ist dieses Verfahren besonders wirtschaftlich und umweltfreundlich.

Zur Beurteilung der Eigenschaften der beanspruchten Pigmentzubereitungen in Lacksystemen wurden aus der Vielzahl der bekannten Systeme ein Alkyd-Melaminharz-Lack (AM6) auf Basis eines mittelöligen, nichttrocknenden Alkydharzes aus synthetischen Fettsäuren und Phthalsäureanhydrid und eines butanolveretherten Melaminharzes und Anteilen eines nichttrocknenden Alkydharzes auf Basis von Ricinensäure (kurzölig) sowie ein Acrylharzeinbrennlack auf Basis einer nichtwäßrigen Dispersion (TSA-NAD) ausgewählt. In den nachfolgenden Beispielen wird darauf unter der Bezeichnung AM6 bzw. TSA-NAD verwiesen.

Die Rheologie des Mahlguts nach der Dispergierung (Millbase-Rheologie) wird anhand der folgenden fünfstufigen Skala beurteilt:
5 dünnflüssig
4 flüssig
3 dickflüssig
2 leicht gestockt
1 gestockt
Nach dem Verdünnen des Mahlguts auf die Pigmentkonzentration wurde die Viskosität mit dem Viskospatel nach Rossmann, Typ 301, der Firma ERICHSEN beurteilt.

Glanzmessungen erfolgten unter einem Winkel von 20 ° nach DIN 67530 (ASTMD 523) mit dem "multigloss"-Glanzmeßgerät der Firma BYK-MALLINCKRODT.

In den nachstehenden Beispielen bedeuten Teile Gewichtsteile und Prozente Gewichtsprozente. Der in den Beispielen häufig auftretende unsubstituierte Rest Q₂ der Formel V 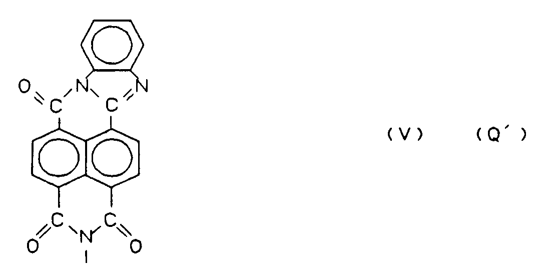
wird durch Q′ abgekürzt.

### Beispiel 1

78 g 4,10-Dibromanthanthron-Rohpigment in Form des feuchten Preßkuchens werden mit 130 ml Wasser angerührt. Zu der Suspension gibt man 2,0 g Pigmentdispergator der Formel 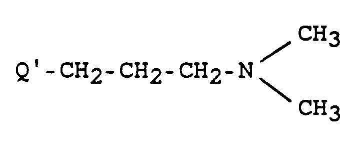
und rührt 15 Minuten nach. Anschließend füllt man diese Suspension in eine Perlmühle Typ Drais PM1, die mit 1 600 g Zirkoniumoxid-Perlen ⌀ 1 bis 1,5 mm gefüllt ist, und mahlt 2 Stunden bei 2 800 UPM. Danach wird das Mahlgut abgesiebt und die Zirkoniumoxid-Perlen werden mit Wasser abgespült. Man saugt die Präpigmentzubereitungssuspension ab und wäscht mit Wasser nach. Der Filterkuchen wird danach mit soviel Wasser angerührt, daß das Gewicht der Suspension 580 g beträgt. Danach gibt man 80 g Isobutanol 100%ig zu und erhitzt 3 Stunden zum Sieden. Anschließend destilliert man das Isobutanol bis 100 °C am Übergang ab, saugt bei 50 °C ab, wäscht mit Wasser nach und trocknet bei 80 °C.

Man erhält 79,3 g Pigmentzubereitung. Bei der Ausprüfung im AM6-Lack erhält man farbstarke gelbstichig rote Lackierungen. Die Millbase-Rheologie (15%ig) wird mit 4 und der Glanz mit 80 bewertet.

Verzichtet man bei der Pigmentzubereitungsherstellung auf den Pigmentdispergator, so erhält man ein Pigment, dessen Millbase-Viskosität mit 1 bewertet wird und einen Glanz von 64 aufweist. Das Pigment ist 13 % farbschwächer als die Pigmentzubereitung. Das aus dem gleichen Rohpigment gemäß der US-PS 4018791, Beispiel 9, erhaltene Pigment besitzt eine Millbase-Rheologie von 1. Der Glanz wird mit 8 bewertet.

### Beispiel 2

78 g 4,10-Dibromanthanthron-Rohpigment in Form des feuchten Preßkuchens werden mit 130 ml Wasser angerührt. Zu dieser Suspension gibt man 4,0 g Pigmentdispergator der Formel 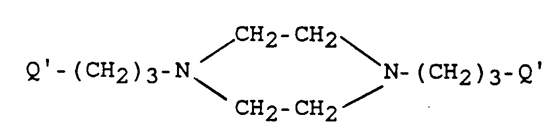
und rührt 15 Minuten nach. Anschließend füllt man diese Suspension in eine Perlmühle Typ Drais PM1, die mit 1 600 g Zikroniumoxid-Perlen ⌀ 1 bis 1,5 mm gefüllt ist, und mahlt 2 Stunden bei 2 800 UPM. Danach wird das Mahlgut abgesiebt und die Zirkoniumoxid-Perlen werden mit Wasser abgespült. Man saugt die Präpigmentzubereitungssuspension ab und wäscht mit Wasser nach. Der Filterkuchen wird danach mit soviel Wasser angerührt, daß das Gewicht der Suspension 580 g beträgt. Danach gibt man 80 g Isobutanol 100 %ig zu und erhitzt 3 Stunden zum Sieden. Anschließend destilliert man das Isobutanol bis 100 °C am übergang ab, saugt bei 50 °C ab, wäscht mit Wasser nach und trocknet bei 80 °C.

Man erhält 80,8 g Pigmentzubereitung. Bei der Ausprüfung im AM6-Lack erhält man farbstarke gelbstichig rote Lackierungen. Die Millbase-Rheologie (15%ig) wird mit 4 und der Glanz mit 81 bewertet.

Die Viskosität des 5%igen Volltonlacks beträgt 2,6˝. Ohne Pigmentdispergator beträgt die Viskosität 4,1˝. Das Pigment ist farbstärker als das nach Beispiel 1 erhaltene Pigment.

### Beispiel 3

78 g 4,10-Dibromanthanthron-Rohpigment in Form des feuchten Preßkuchens werden mit 130 ml Wasser angerührt. Zu dieser Suspension gibt man 4,0 g Pigmentdispergator der Formel 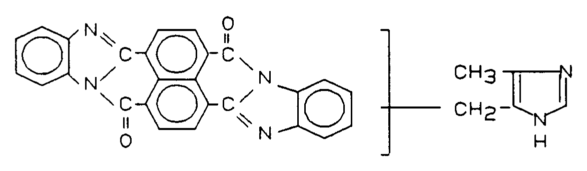
und rührt 15 Minuten nach. Anschließend füllt man diese Suspension in eine Perlmühle Typ Drais PM1, die mit 1 600 g Quarz-Perlen ⌀ 1 mm gefüllt ist, und mahlt 2 Stunden bei 2 800 UPM. Danach wird das Mahlgut abgesiebt und die Quarz-Perlen werden mit Wasser abgespült. Man saugt die Präpigmentzubereitungssuspension ab und wäscht mit Wasser nach. Der Filterkuchen wird danach mit soviel Wasser angerührt, daß das Gewicht der Suspension 580 g beträgt. Danach gibt man 80 g Isobutanol 100%ig zu und erhitzt 3 Stunden zum Sieden. Anschließend destilliert man das Isobutanol bis 100 °C am Übergang ab, saugt bei 50 °C ab, wäscht mit Wasser nach und trocknet bei 80 °C.

Man erhält 81,3 g Pigmentzubereitung. Bei der Ausprüfung im AM6-Lack erhält man farbstarke gelbstichig rote Lackierungen. Die Millbase-Rheologie (15%ig) wird mit 2 bis 3 und der Glanz mit 81 bewertet.

### Beispiel 4

78 g 4,10-Dibromanthanthron-Rohpigment in Form des feuchten Preßkuchens werden mit 130 ml Wasser angerührt. Zu dieser Suspension gibt man 1,6 g Pigmentdispergator der Formel 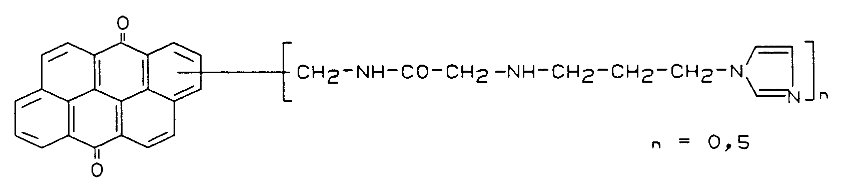
und rührt 15 Minuten nach. Anschließend füllt man diese Suspension in eine Perlmühle Typ Drais PM1, die mit 1 600 g Zirkoniumoxid-Perlen ⌀ 1 bis 1,5 mm gefüllt ist, und mahlt 2 Stunden bei 2 800 UPM. Danach wird das Mahlgut abgesiebt und die Zirkoniumoxid-Perlen werden mit Wasser abgespült. Man saugt die Präpigmentzubereitungssuspension ab und wäscht mit Wasser nach. Der Filterkuchen wird danach mit soviel Wasser angerührt, daß das Gewicht der Suspension 580 g beträgt. Danach gibt man 80 g Isobutanol 100%ig zu und erhitzt 3 Stunden zum Sieden. Anschließend destilliert man das Isobutanol bis 100 °C am Übergang ab, saugt bei 50 °C ab, wäscht mit Wasser nach und trocknet bei 80 °C.

Man erhält 78,2 g Pigmentzubereitung. Bei der Ausprüfung im AM6-Lack erhält man farbstarke gelbstichig rote Lackierungen. Die Millbase-Rheologie (15%ig) wird mit 2 bis 3 und der Glanz mit 78 bewertet.

### Beispiel 5

78 g 4,10-Dibromanthanthron-Rohpigment in Form des feuchten Preßkuchens werden mit 130 ml Wasser angerührt. Zu dieser Suspension gibt man 2,0 g Pigmentdispergator der Formel 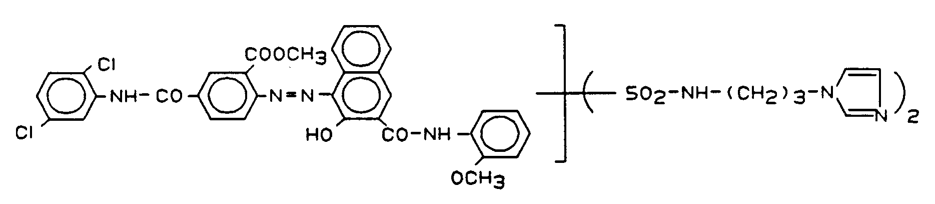
und rührt 15 Minuten nach. Anschließend füllt man diese Suspension in eine Perlmühle Typ Drais PM1, die mit 1 600 g Zirkoniumoxid-Perlen ⌀ 1 bis 1,5 mm gefüllt ist, und mahlt 2 Stunden bei 2 800 UPM. Danach wird das Mahlgut abgesiebt und die Zirkoniumoxid-Perlen werden mit Wasser abgespült. Man saugt die Präpigmentzubereitungssuspension ab und wäscht mit Wasser nach. Der Filterkuchen wird danach mit soviel Wasser angerührt, daß das Gewicht der Suspension 580 g beträgt. Danach gibt man 80 g Isobutanol 100%ig zu und erhitzt 3 Stunden zum Sieden. Anschließend destiliert man das Isobutanol bis 100 °C am Übergang ab, saugt bei 50 °C ab, wäscht mit Wasser nach und trocknet bei 80 °C.

Man erhält 79.1 g Pigmentzubereitung. Bei der Ausprüfung im AM6-Lack erhält man farbstarke gelbstichig rote Lackierungen. Die Millbase-Rheologie (15%ig) wird mit 4 und der Glanz mit 81 bewertet.

### Beispiel 6

78 g 4,10-Dibromanthanthron-Rohpigment in Form des feuchten Preßkuchens werden mit 130 ml Wasser angerührt. Zu dieser Suspension gibt man 2,0 g Pigmentdispergator der Formel 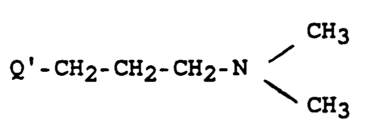
und 2,0 g Pigmentdispergator der Formel 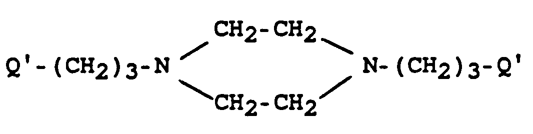
und rührt 15 Minuten nach. Anschließend füllt man diese Suspension in eine Perlmühle Typ Drais PM1, die mit 1 600 g Zirkoniumoxid-Perlen ⌀ 1 bis 1,5 mm gefüllt ist, und mahlt 2 Stunden bei 2800 UPM. Danach wird das Mahlgut abgesiebt und die Zirkoniumoxid-Perlen werden mit Wasser abgespült. Man saugt die Präpigmentzubereitungssuspension ab und wäscht mit Wasser nach. Der Filterkuchen wird danach mit soviel Wasser angerührt, daß das Gewicht der Suspension 580 g beträgt. Danach gibt man 80 g Isobutanol 100%ig zu und erhitzt 3 Stunden zum Sieden. Anschließend destilliert man das Isobutanol bis 100 °C am Übergang ab, saugt bei 50 °C ab, wäscht mit Wasser nach und trocknet bei 80 °C.

Man erhält 81,7 g Pigmentzubereitung. Bei der Ausprüfung im AM6-Lack erhält man farbstarke gelbstichigrote Lackierungen. Die Millbase-Rheologie (15%ig) wird mit 4 und der Glanz mit 83 bewertet.

Das Pigment ist farbstärker als das nach Beispiel 1 erhaltene Pigment.

### Beispiel 7

78 g 4,10-Dibromanthanthron-Rohpigment in Form des feuchten Preßkuchens werden mit 130 ml Wasser angerührt. Zu dieser Suspension gibt man 6,0 g Pigmentdispergator der Formel 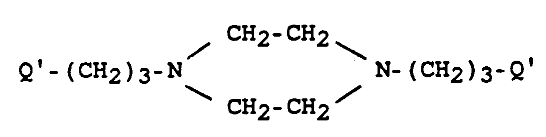
und rührt 15 Minuten nach. Anschließend füllt man diese Suspension in eine Perlmühle Typ Drais PM1, die mit 1 600 g Zirkoniumoxid-Perlen ⌀ 1 bis 1,5 mm gefüllt ist, und mahlt 2 Stunden bei 2800 UPM. Danach wird das Mahlgut abgesiebt und die Zirkoniumoxid-Perlen werden mit Wasser abgespült. Man saugt die Präpigmentzubereitungssuspension ab und wäscht mit Wasser nach. Der Filterkuchen wird danach mit soviel Wasser angerührt, daß das Gewicht der Suspension 580 g beträgt. Danach gibt man 80 g Isobutanol 100%ig zu und erhitzt 3 Stunden zum Sieden. Anschließend destilliert man das Isobutanol bis 100 °C am Übergang ab, saugt bei 50 °C ab, wäscht mit Wasser nach und trocknet bei 80 °C.

Man erhält 82,5 g Pigmentzubereitung. Bei der Ausprüfung im AM6-Lack erhält man farbstarke gelbstichig rote Lackierungen. Die Millbase-Rheologie (15%ig) wird mit 3 bis 4 und der Glanz mit 84 bewertet.

Das Pigment ist transparenter und farbstärker als das nach Beispiel 2 erhaltene Pigment.

### Beispiel 8

78 g 4,10-Dibromanthanthron-Rohpigment in Form des feuchten Preßkuchens werden mit 130 ml Wasser angerührt. Zu dieser Suspension gibt man 4,0 g Pigmentdispergator der Formel 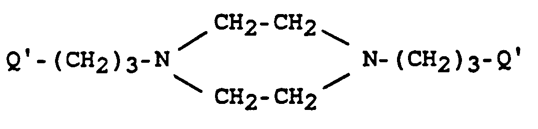
und rührt 15 Minuten nach. Anschließend füllt man diese Suspension in eine Perlmühle Typ Drais PM1, die mit 1 600 g Zirkoniumoxid-Perlen ⌀ 0,6 bis 1 mm gefüllt ist, und mahlt 2 Stunden bei 2800 UPM. Danach wird das Mahlgut abgesiebt und die Zirkoniumoxid-Perlen werden mit Wasser abgespült. Man saugt die Präpigmentzubereitungssuspension ab und wäscht mit Wasser nach. Der Filterkuchen wird danach mit soviel Wasser angerührt, daß das Gewicht der Suspension 580 g beträgt. Danach gibt man 80 g Isobutanol 100%ig zu und erhitzt 3 Stunden auf 150 °C. Man läßt auf 90 °C abkühlen, destilliert das Isobutanol bis 100 °C am Übergang ab, saugt bei 50 °C ab, wäscht mit Wasser nach und trocknet bei 80 °C.

Man erhält 79,3 g Pigmentzubereitung. Bei der Ausprüfung im AM6-Lack erhält man farbstarke gelbstichig rote Lackierungen. Die Millbase-Rheologie (15%ig) wird mit 3 bis 4 und der Glanz mit 82 bewertet.

Das Pigment ist etwas deckender als das nach Beispiel 1 erhaltene Pigment.

### Beispiel 9

78 g 4,10-Dibromanthanthron-Rohpigment in Form des feuchten Preßkuchens werden mit 130 ml Wasser angerührt. Zu dieser Suspension gibt man 4,0 g Pigmentdispergator der Formel 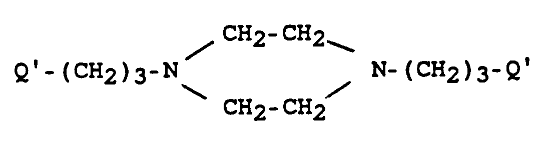
und rührt 15 Minuten nach. Anschließend füllt man diese Suspension in eine Perlmühle Typ Drais PM1, die mit 1 600 g Zirkoniumoxid-Perlen ⌀ 1 bis 1,5 mm gefüllt ist, und mahlt 2 Stunden bei 2800 UPM. Danach wird das Mahlgut abgesiebt und die Zirkoniumoxid-Perlen werden mit Wasser abgespült. Man saugt die Präpigmentzubereitungssuspension ab und wäscht mit Wasser nach. Der Filterkuchen wird danach mit soviel Wasser angerührt, daß das Gewicht der Suspension 580 g beträgt. Danach gibt man 400 g Isobutanol 100%ig zu und erhitzt 3 Stunden auf 150 °C. Man läßt auf 90 °C abkühlen, destilliert das Isobutanol bis 100 °C am Übergang ab, saugt bei 50 °C ab, wäscht mit Wasser nach und trocknet bei 80 °C.

Man erhält 80,9 g Pigmentzubereitung. Bei der Ausprüfung im AM6-Lack erhält man farbstarke gelbstichig rote Lackierungen. Die Millbase-Rheologie (15%ig) wird mit 3 bis 4 und der Glanz mit 83 bewertet.

### Beispiel 10

78 g 4,10-Dibromanthanthron-Rohpigment in Form des feuchten Preßkuchens werden mit 130 ml Wasser angerührt. Zu dieser Suspension gibt man 4,0 g Pigmentdispergator der Formel 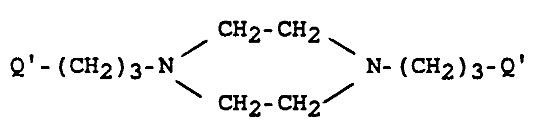
und rührt 15 Minuten nach. Anschließend füllt man diese Suspension in eine Perlmühle Typ Drais PM1, die mit 1 600 g Zirkoniumoxid-Perlen ⌀ 1 bis 1,5 mm gefüllt ist, und mahlt 2 Stunden bei 2 800 UPM. Danach wird das Mahlgut abgesiebt und die Zirkoniumoxid-Perlen werden mit Wasser abgespült. Man saugt die Präpigmentzubereitungssuspension ab und wäscht mit Wasser nach. Der Filterkuchen wird danach mit soviel Wasser angerührt, daß das Gewicht der Suspension 580 g beträgt. Danach gibt man 80 g Xylol zu und erhitzt 3 Stunden zum Sieden. Anschließend destilliert man das Xylol bis 100 °C am Übergang ab, saugt bei 50 °C ab, wäscht mit Wasser nach und trocknet bei 80 °C.

Man erhält 80,1 g Pigmentzubereitung. Bei der Ausprüfung im AM6-Lack erhält man farbstarke gelbstichig rote Lackierungen. Die Millbase-Rheologie (15%ig) wird mit 3 bis 4 und der Glanz mit 82 bewertet.

Das Pigment ist deckender als das nach Beispiel 1 erhaltene Pigment.

### Beispiel 11

2 kg 4,10-Dibromanthanthron-Rohpigment in Form des feuchten Preßkuchens werden mit 10 l Wasser angerührt. Zu dieser Suspension gibt man 102 g Pigmentdispergator der Formel 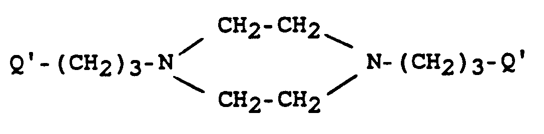
und rührt 15 Minuten nach. Die Suspension wird danach in einer kontinuierlichen Rührwerkskugelmühle, die mit Zirkonoxid-Perlen vom Durchmesser 1 bis 1,5 mm gefüllt ist, in 4 Passagen bei 20 bis 30 °C gemahlen. Während der Mahlung werden von Zeit zu Zeit geringe Mengen Wasser zugesetzt, um optimale Mahlbedingungen aufrechtzuerhalten. 1000 g dieser Mahlgutsuspension werden danach mit 139 g Isobutanol versetzt und 3 Stunden zum Sieden erhitzt. Anschließend destilliert man das Isobutanol bis 100 °C am Übergang ab, saugt bei 50 °C ab, wäscht mit Wasser nach und trocknet bei 80 °C.

Man erhält 79,3 g Pigmentzubereitung. Bei der Ausprüfung im AM6-Lack erhält man farbstarke gelbstichig rote Lackierungen. Die Millbase-Rheologie (15%ig) wird mit 4 und der Glanz mit 80 bewertet.

## Patentansprüche

1. Verfahren zur Herstellung von Pigmentzubereitungen der Anthanthronreihe, dadurch gekennzeichnet, daß man Anthanthron-Rohpigmente einer wäßrigen Perlmahlung in Gegenwart von Pigmentdispergatoren der allgemeinen Formeln 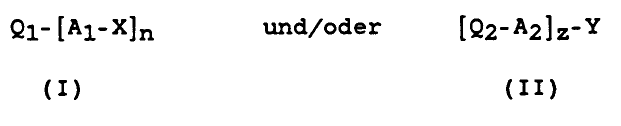 unterwirft, wobei in Formel (I) Q₁ den Rest einer Anthanthron-, Azo-, Isoindolinon, Diketopyrrolopyrrol-oder Perinon-Verbindung, A₁ eine direkte Bindung oder eine bivalente Gruppe aus der Reihe -O-, -S-, -NR₃-, -CO-, -SO₂-, -CR₄R₅- und Arylen oder eine chemisch sinnvolle Kombination dieser bivalenten Gruppen, X eine Gruppe 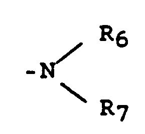 oder einen heterocyclischen Rest mit mindestens einem Stickstoffatom, und R₃, R₄, R₅, R₆ und R₇ Wasserstoffatome oder gesättigte oder ungesättigte Alkyl (C₁-C₄)-Gruppen und n eine ganze Zahl von 1 bis 4 bedeuten, und in Formel (II) Q₂ einen Rest der allgemeinen Formel 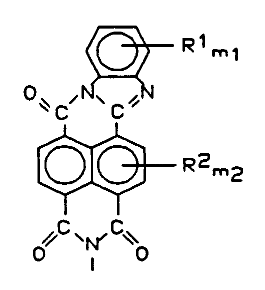 darstellt, in welcher R₁ ein Wasserstoff- oder Halogenatom, eine Alkyl(C₁-C₄)-, Alkoxy(C₁-C₄)- oder Cyanogruppen bedeutet, oder im Fall m₁>1 eine Kombination dieser Substituenten sein kann, R₂ ein Wasserstoff- oder Halogenatom, eine Alkyl(C₁-C₄)-, Alkoxy(C₁-C₄)- oder Cyanogruppe bedeutet oder im Fall m₂>1 eine Kombination dieser Substituenten sein kann, m₁ und m₂ Zahlen von 1 bis 4 bedeuten, A₂ eine bivalente Gruppe aus der Reihe -(CH₂)ₚ-, CR₈R₉-, Arylen, -O-, -NR₁₀-, -CO- oder -SO₂- oder eine chemisch sinnvolle Kombination dieser bivalenten Gruppen bedeutet, wobei p eine Zahl von 1 bis 6, R₈, R₉ und R₁₀ Wasserstoffatome oder gesättigte oder ungesättigte Alkyl(C₁-C₄)-Gruppen darstellen, Y eine Dimethylamino- oder Diethylaminogruppe oder einen Imidazol- oder Piperazinrest bedeutet und z die Zahl 1 oder 2 darstellt, und die erhaltenen Präpigmentzubereitungssuspensionen ohne oder nach Zwischenisolierung einer thermischen Behandlung in Gegenwart oder Abwesenheit eines organischen Lösungsmittels bei Temperaturen von etwa 20 bis etwa 200 °C unterwirft.

2. Verfahren nach Anspruch 1, dadurch gekennzeichnet, daß man Anthanthron-Rohpigmente einer Teilchengröße von > 5 µm verwendet.

3. Verfahren nach mindestens einem der Ansprüche 1 und 2, dadurch gekennzeichnet, daß man als Rohpigmente über das Oxoniumsulfat hergestellte Anthanthron-Rohpigmente verwendet.

4. Verfahren nach mindestens einem der Ansprüche 1 bis 3, dadurch gekennzeichent, daß man Pigmentdispergatoren der in Anspruch 1 genannten allgemeinen Formel (II) verwendet in welcher Q₂ den Rest 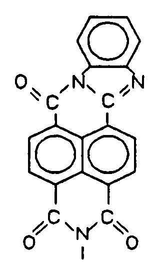 darstellt, Y eine Dimethylamino- oder Diethylaminogruppe oder einen Imidazol- oder Piperazinrest bedeutet und z die Zahl 1 oder 2 darstellt.

5. Verfahren nach mindestens einem der Ansprüche 1 bis 3, dadurch gekennzeichnet, daß man Pigmentdispergatoren der Formel 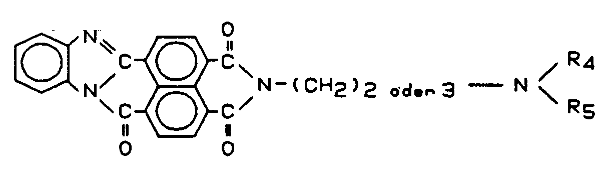 in welcher R₄ und R₅ Alkyl(C₁-C₄)-Gruppen oder zusammen mit dem Stickstoffatom einen Heterocyclus bilden, verwendet.

6. Verfahren nach mindestens einem der Ansprüche 1 bis 3, dadurch gekennzeichnet, daß man Pigmentdispergatoren der Formel 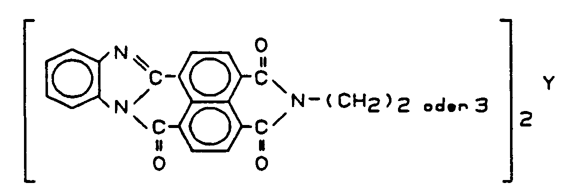 in welcher Y den Piperazinrest bedeutet, verwendet.

7. Verfahren nach mindestens einem der Ansprüche 1 bis 3, dadurch gekennzeichnet, daß man Mischungen von Pigmentdispergatoren der in Ansprüchen 5 und 6 genannten Formeln verwendet.

8. Verfahren nach mindestens einem der Ansprüche 1 bis 6, dadurch gekennzeichnet, daß man die Dispergatoren in einer Menge von etwa 1 bis etwa 10 Gewichtsprozent, bezogen auf das Anthanthron-Rohpigment, zusetzt.

9. Verfahren nach mindestens einem der Ansprüche 1 bis 8, dadurch gekennzeichnet, daß man als organisches Lösungsmittel zur thermischen Behandlung der Präpigmentzubereitungssuspensionen aliphatische Alkohole mit 1 bis 6 Kohlenstoffatomen verwendet.

10. Verfahren nach mindestens einem der Ansprüche 1 bis 9, dadurch gekennzeichnet, daß man die erhaltenen Präpigmentzubereitungssuspensionen ohne oder nach Zwischenisolierung einer thermischen Behandlung in Gegenwart oder Abwesenheit eines organischen Lösungsmittels bei Temperaturen von etwa 80 bis etwa 150 °C unterwirft.

11. Verfahren nach mindestens einem der Ansprüche 1 bis 10, dadurch gekennzeichnet, daß man die nach erfolgter Perlmahlung der Anthanthron-Rohpigmente in Gegenwart von Pigmentdispergatoren erhaltenen Präpigmentzubereitungssuspensionen ohne Zwischenisolierung einer thermischen Behandlung in Gegenwart organischer Lösungsmittel zuführt.

## Claims

1. A process for the preparation of pigment preparations of the anthanthrone series, which comprises subjecting anthanthrone crude pigments to aqueous bead milling in the presence of pigment dispersants of the formulae 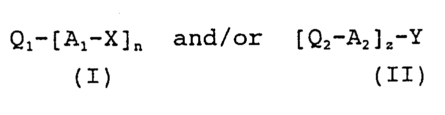 in which in formula (I) Q₁ is the radical of an anthanthrone, azo, isoindolinone, diketopyrrolopyrrole or perinone compound, A₁ is a direct bond or a divalent group from the series comprising -O-, -S-, -NR₃-, -CO-, -SO₂-, -CR₄R₅- and arylene, or a chemically reasonable combination of these divalent groups, X is a group 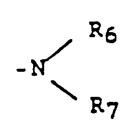 or a heterocyclic radical having at least one nitrogen atom, and R₃, R₄, R₅, R₆ and R₇ are hydrogen atoms or saturated or unsaturated C₁-C₄-alkyl groups and n is a whole number from 1 to 4, and in formula (II) Q₂ is a radical of the formula 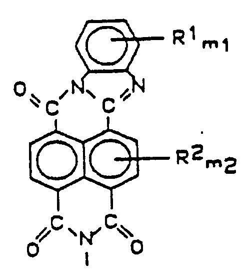 in which R₁ is a hydrogen or halogen atom or a C₁-C₄-alkyl, C₁-C₄-alkoxy or cyano group, or, in the case that m₁>1, R₁ can be a combination of these substituents, R₂ is a hydrogen or halogen atom or a C₁-C₄-alkyl, C₁-C₄-alkoxy or cyano group or, in the case that m₂>1, R₂ can be a combination of these substituents, m₁ and m₂ are numbers from 1 to 4, A₂ is a divalent group from the series comprising -(CH₂)ₚ-, CR₈R₉-, arylene, -O-, -NR₁₀-, -CO- or -SO₂- or a chemically reasonable combination of these divalent groups, in which p is a number from 1 to 6, R₈, R₉ and R₁₀ are hydrogen atoms or saturated or unsaturated C₁-C₄-alkyl groups, Y is a dimethylamino or diethylamino group or an imidazole or piperazine radical and z is the number 1 or 2, and subjecting the suspensions of the prepigment preparations obtained without or after intermediate isolation to a heat treatment in the presence or absence of an organic solvent at temperatures from about 20 to about 200°C.

2. The process as claimed in claim 1, wherein anthanthrone crude pigments having a particle size of > 5 µm are used.

3. The process as claimed in at least one of claims 1 and 2, wherein the crude pigments used are anthanthrone crude pigments prepared via the oxonium sulfate.

4. The process as claimed in at least one of claims 1 to 3, wherein pigment dispersants of the formula (II) mentioned in claim 1 are used, in which Q₂ is the radical 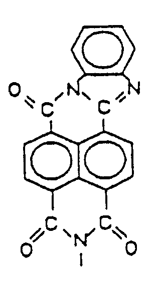 Y is a dimethylamino or diethylamino group or an imidazole or piperazine radical and z is the number 1 or 2.

5. The process as claimed in at least one of claims 1 to 3, wherein pigment dispersants of the formula 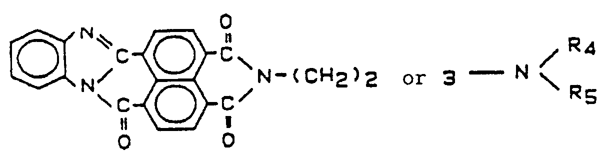 in which R₄ and R₅ are C₁-C₄-alkyl groups or together with the nitrogen atom form a heterocycle are used.

6. The process as claimed in at least one of claims 1 to 3, wherein pigment dispersants of the formula 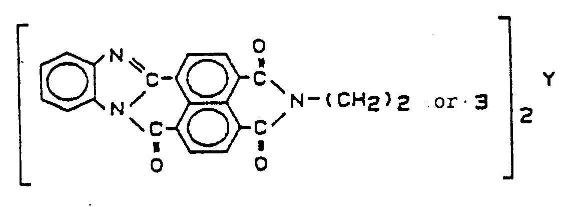 in which Y is a piperazine radical are used.

7. The process as claimed in at least one of claims 1 to 3, wherein mixtures of pigment dispersants of the formulae mentioned in claims 5 and 6 are used.

8. The process as claimed in at least one of claims 1 to 6, wherein the dispersants are added in an amount of about 1 to about 10 percent by weight, relative to the anthanthrone crude pigment.

9. The process as claimed in at least one of claims 1 to 8, wherein aliphatic alcohols having 1 to 6 carbon atoms are used as the organic solvent for the heat treatment of the suspensions of the prepigment preparations.

10. The process as claimed in at least one of claims 1 to 9, wherein the suspensions of the prepigment preparations are subjected without or after intermediate isolation to a heat treatment in the presence or absence of an organic solvent at temperatures from about 80 to about 150°C.

11. The process as claimed in at least one of claims 1 to 10, wherein the suspensions of the prepigment preparations obtained after completed bead milling of the anthanthrone crude pigments in the presence of pigment dispersants are transferred to a heat treatment in the presence of organic solvents without intermediate isolation.

## Revendications

1. Procédé pour fabriquer des préparations pigmentaires de la série des anthanthrones, caractérisé en ce qu'on soumet les pigments bruts d'anthanthrone obtenus lors de la synthèse à un broyage aqueux au broyeur à billes en présence de dispersants pigmentaires ayant les formules générales suivantes : 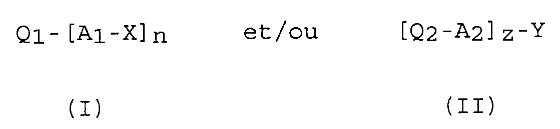 où, dans la formule (I), Q₁ est le résidu d'un composé anthanthrone, azoïque, isoindolinone, dicétopyrrolopyrrole ou périnone, A₁ est une liaison simple ou un groupe divalent appartenant à la série -O-, -S-, -NR₃-, -CO-, -SO₂-, -CR₄R₅- et arylène ou une combinaison chimiquement plausible de ces groupes divalents,
X est un groupe 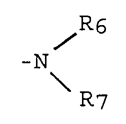 ou un radical hétérocyclique ayant au moins un atome d'azote et R₃, R₄, R₅, R₆ et R₇ sont des atomes d'hydrogène ou des radicaux alkyle en C₁-C₄ éventuellement saturés, et n est un nombre entier de 1 à 4, et, dans la formule (II), Q₂ est un radical de formule générale 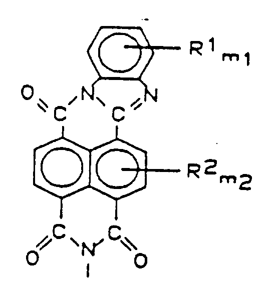 dans laquelle R₁ est un atome d'hydrogène ou d'halogène, un radical alkyle en C₁-C₄, alcoxy en C₁-C₄ ou cyano, ou encore, si m₁>1 peut représenter une combinaison de ces substituants, R₂ est un atome d'hydrogène ou d'halogène, un radical alkyle en C₁-C₄, alcoxy en C₁-C₄ ou cyano ou encore, si m₂>1 peut représenter une combinaison de ces substituants, m₁ et m₂ sont des nombres de 1 à 4, A₂ est un groupe divalent choisi dans la série comprenant -(CH₂)ₚ-, -CR₈R₉-, arylène, -O-, -NR₁₀-, -CO- ou -SO₂- ou encore une combinaison chimiquement plausible de ces groupes divalents, où p est un nombre de 1 à 6, R₈, R₉ et R₁₀ sont des atomes d'hydrogène ou des groupes alkyle en C₁-C₄ éventuellement saturés, Y est un groupe diméthylamino ou diéthylamino ou un radical imidazole ou pipérazine, et z est le nombre 1 ou 2, et les suspensions obtenues de préparations prépigmentaires, sans ou après isolement intermédiaire, sont soumis à un traitement thermique en présence ou en l'absence d'un solvant organique à des températures d'environ 20 à environ 200°C.

2. Procédé selon la revendication 1, caractérisé en ce qu'on utilise des pigments rouges d'anthanthrone ayant une granulométrie supérieure à 5 µm.

3. Procédé selon au moins l'une des revendications 1 et 2, caractérisé en ce qu'on utilise comme pigments bruts des pigments bruts d'anthanthrone préparés par l'intermédiaire du sulfate d'oxonium.

4. Procédé selon au moins l'une des revendications 1 à 3, caractérisé en ce qu'on utilise des dispersants pigmentaires ayant la formule générale (II) donnée dans la revendication 1, dans laquelle Q₂ est le radical 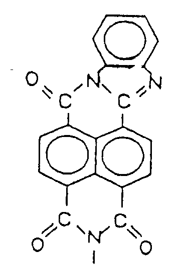 Y est un groupe diméthylamino ou diéthylamino ou encore un radical imidazole ou pipérazine, et z est le nombre 1 ou 2.

5. Procédé selon au moins l'une des revendications 1 à 3, caractérisé en ce qu'on utilise des dispersants pigmentaires de formule 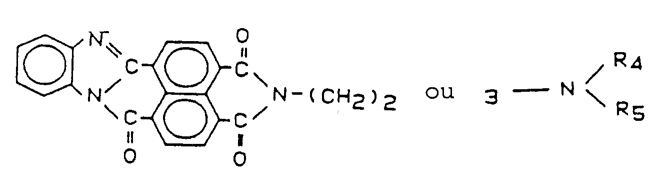 où R₄ et R₅ sont des groupes alkyle en C₁-C₄ ou forment un hétérocycle avec l'atome d'azote.

6. Procédé selon au moins l'une des revendications 1 à 3, caractérisé en ce qu'on utilise des dispersants pigmentaires de formule 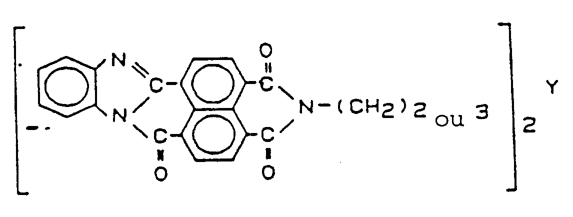 dans laquelle Y est le radical pipérazine.

7. Procédé selon au moins l'une des revendications 1 à 3, caractérisé en ce qu'on utilise des mélanges de dispersants pigmentaires ayant les formules données dans les revendications 5 et 6.

8. Procédé selon au moins l'une des revendications 1 à 6, caractérisé en ce que les dispersants sont ajoutés en une quantité d'environ 1 à environ 10 % en poids par rapport au pigment brut d'anthanthrone.

9. Procédé selon au moins l'une des revendications 1 à 8, caractérisé en ce qu'on utilise comme solvant organique pour le traitement thermique des suspensions de préparations prépigmentaires des alcools aliphatiques ayant de 1 à 6 atomes de carbone.

10. Procédé selon au moins l'une des revendications 1 à 9, caractérisé en ce qu'on soumet les suspensions de préparations prépigmentaires obtenues, avec ou sans isolement intermédiaire, à un traitement thermique en présence ou en l'absence d'un solvant organique, à des températures d'environ 80 à environ 150°C.

11. Procédé selon au moins l'une des revendications 1 à 10, caractérisé en ce qu'on soumet à un traitement thermique en présence de solvants organiques, sans isolement intermédiaire, les suspensions de préparations prépigmentaires obtenues en présence de dispersants pigmentaires, après le broyage, au broyeur à billes, des pigments bruts d'anthanthrone.
